## Europäisches Patentamt
## European Patent Office
## Office européen des brevets

(19)

(11) Numéro de publication: **0 022 726**
**B1**

(12)

# FASCICULE DE BREVET EUROPEEN

(45) Date de publication du fascicule du brevet:
04.04.84

(51) Int. Cl.³: **B 01 J 8/18,** B 01 J 8/44,
F 27 B 15/10

(21) Numéro de dépôt: **80401058.5**

(22) Date de dépôt: **11.07.80**

(54) **Grille de fluidisation.**

(30) Priorité: **16.07.79 FR 7918352**

(43) Date de publication de la demande:
**21.01.81 Bulletin 81/3**

(45) Mention de la délivrance du brevet:
**04.04.84 Bulletin 84/14**

(84) Etats contractants désignés:
**AT BE CH DE GB IT LI LU NL SE**

(56) Documents cités:
**FR - A - 1 352 298**
**FR - A - 2 344 801**
**US - A - 3 462 246**
**US - A - 3 954 390**

(73) Titulaire: **TUNZINI-NESSI ENTREPRISES D'EQUIPEMENTS, 1 place Honoré de Balzac, F-95100 Argenteuil (FR)**

(72) Inventeur: **Meunier, Georges, 15 rue Vauthier, F-92100 Boulogne (FR)**

(74) Mandataire: **Eudes, Marcel et al, Saint-Gobain Recherche 39 Quai Lucien Lefranc, F-93304 Aubervilliers Cedex (FR)**

## Grille de fluidisation

La présente invention concerne une grille de fluidisation de particules solides destinées notamment à travailler à haute température.

Pour effectuer la fluidisation de particules solides à haute température, il est connu, notamment par le document US-A-3 462 246, d'utiliser des boîtes à vent fermées par des grilles constituées d'une série de tubes de fluidisation verticaux noyés dans une voûte de blocs réfractaires. Ce type de grilles présente plusieurs inconvénients: elles sont sensibles aux différences de dilatation des matériaux constituants de sorte qu'elles sont difficiles à rendre étanches et que leurs interstices laissent toujours passer une certaine quantité d'air de fluidisation ou fuir une partie des particules solides que l'on cherche à fluidiser, ce qui provoque une érosion progressive. D'autre part, elles ne permettent pas de changer les tubes pour modifier la distribution du gaz de fluidisation en fonction du matériau à fluidiser ou lorsqu'ils sont hors d'usage.

On connait aussi, notamment par le document FR-A-2 344 801, une grille de fluidisation dans laquelle les tubes de fluidisation sont tout simplement noyés dans une couche des particules à fluidiser qui constitue un lit mort jouant un rôle d'écran thermique analogue à celui de la voûte de blocs réfractaires du document précédemment cité.

Les divers dispositifs décrits par le document FR-A-2 344 801 comportent essentiellement une colonne métallique cyclindrique à l'intérieur de laquelle vient se raccorder, par exemple par soudure, la paroi, munie des tubes de fluidisation, séparant la boîte à vent de la chambre de fluidisation.

Le lit mort supporté par cette paroi apporte divers avantages, notamment par la facilité présentée par la construction de la grille, et les interventions ultérieures sur les tubes de fluidisation.

Ces dispositifs présentent cependant certains inconvénients. Ainsi qu'il est d'ailleurs indiqué dans le brevet français cité ci-dessus, la paroi séparative est fortement sollicitée par les dilatations thermiques, ce qui a conduit à diverses propositions, par exemple, l'utilisation d'une forme »en voûte« ou d'une multiplicité d'appuis.

La présente invention vise à remédier à ces divers inconvénients.

Elle a pour objet une grille de fluidisation destinée notamment à la fluidisation de particules solides à haute température, du type comprenant une paroi métallique constituant tout à la fois un plafond pour une boîte à vent délimitée latéralement par des parois latérales, et un fond pour une chambre de fluidisation, délimitée latéralement par des parois, ladite paroi métallique étant traversée par un ensemble de tubes métalliques verticaux de fluidisation débouchant dans la chambre, à leur niveau supérieur, par des orifices d'injection situés a une même hauteur suffisante pour laisser reposer sur le fond de la chambre une couche de particules en vrac constituant pour lui un écran thermique, lesdits tubes recevent le gaz de fluidisation de la boîte à vent afin de l'injecter dans la chambre de fluidisation par lesdits orifices, caractérisée en ce que ladite paroi métallique forme une cuve ayant sa concavité tournée vers la chambre de fluidisation et ses flancs s'évasant vers le haut, lesdits flancs étant emboîtés partiellement dans une virole métallique et soudés à son bord supérieur par une soudure accessible de l'extérieur, ladite virole constituant elle-même la partie supérieure de la paroi latérale de la boîte à vent, le bord supérieur desdits flancs étant rendu solidaire des parois de la chambre de fluidisation, par des moyens d'assemblage, également accessibles de l'extérieur, assurant l'étanchéité entre ladite chambre et l'extérieur.

La grille selon la présente invention est d'une construction facile, possède une étanchéité durable à chaud comme à froid, permet de munir les tubes de fluidisation de buses d'injection de gaz faciles à remplacer et assure à celles-ci un refroidissement correct tout en procurant une isolation thermique suffisante entre le lit fluidisé et la boîte à vent et en minimisant les contraintes de dilatation grâce à la hauteur de la couche de particules solides qui ne se trouve pas entraînée par le gaz de fluidisation.

A cet effet, dans la grille selon la présente invention, le support des tubes est constitué par un fond bombé normalisé, du type utilisé sur des cuves ou réservoirs de liquides tels que vins, mazout, etc... ou de gaz, donc peu coûteux à fabriquer. Sa concavité étant tournée vers le haut, il présente une bonne résistance aux contraintes mécaniques résultant du poids des particules ou des dilatations. Pour réduire celles-ci d'ailleurs, le bord supérieur des flancs de la cuve n'atteint qu'un niveau sensiblement inférieur à celui des orifices d'injection du gaz de fluidisation.

Un tel fond, grâce à un emboîtement seulement partiel sur une virole métallique le raccordant à la boîte à vent, permet d'obtenir facilement, par soudage sur cette virole, une étanchéité complète et qu'il est en permanence possible de vérifier de l'extérieur.

Les tubes métalliques de fluidisation sont avantageusement munis à leur extrémité supérieure d'une tête d'injection comportant des buses de fluidisation dirigées horizontalement. Une telle tête d'injection permet d'éviter pratiquement tout passage des particules solides en direction de la boîte à vent disposée à la partie inférieure.

Les tubes métalliques de fluidisation peuvent être constitués notamment de deux parties réunies par un manchon, la partie inférieure étant fixée au fond de la cuve, et la tête d'injection appartenant à la partie supérieure. Un tel agencement permet de remplacer facilement les têtes d'injection et ainsi d'adapter les tubes en fonction des conditions de fonctionnement de la grille.

Pour augmenter l'isolation thermique entre le lit fluidisé et la boîte à vent disposée à la partie inférieure, il est possible de disposer, environ à mi-hauteur des tubes de fluidisation et bien entendu sous les manchons d'assemblage éventuels, une dalle de béton léger, isolant, réalisé de façon à rester sans contact avec la cuve métallique. Cette dalle, d'une épaisseur pouvant aller, par exemple de 50 à 100 mm, peut être coulée après emplissage du fond de la cuve jusqu'au niveau voulu par une première couche de particules solides. Une telle dalle améliore en outre la tenue mécanique des tubes de fluidisation.

D'autres éléments, buts et avantages de la présente invention apparaîtront à la lecture de la description ci-dessous d'un exemple avantageux, fait en regard des dessins annexés. Sur ces dessins:

— la figure 1 représente en coupe une grille selon la présente invention,
— la figure 2 est une vue de détail de la figure 1 montrant le mode de raccordement de la grille à sa périphérie, et
— la figure 3 est une vue en coupe agrandie d'une tête d'injection utilisée selon la présente invention.

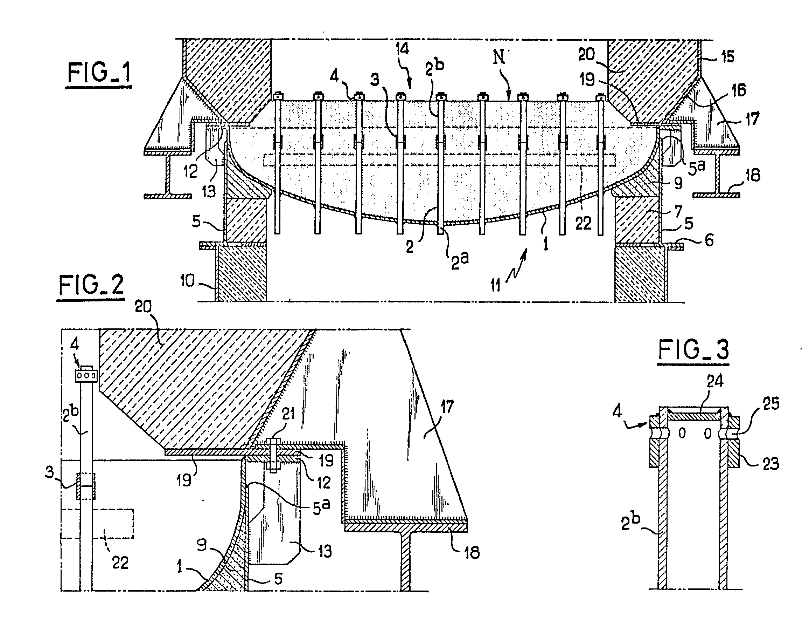

La grille représentée sur la figure 1 comprend une cuve possédant un fond bombé 1 en acier réfractaire dont les bords vont en se relevant. Sur ce fond, est fixée une série de tubes également en acier réfractaire de même longueur, tels que 2. Pour éviter tout risque de fuite dangereuse pour la tenue de la grille, la partie inférieure 2a de ces tubes est dudgeonnée et soudée sur le fond 1. Ces tubes 2 comportent une partie supérieure 2b qui est raccordée à la partie inférieure 2a par un manchon fileté 3. A la partie supérieure de la partie 2b des tubes 2 est disposée une tête d'injection.

Le fond 1 vient s'emboîter partiellement sur une virole 5 dont la partie inférieure est munie d'une bride 6, porteuse d'un doublage isolant 7, en béton léger, complété par un bourrage de matériau réfractaire fibreux 9. La bride inférieure 6 est elle-même assemblée sur les parois latérales 10 de la boîte à vent 11. Pour sa part, le bord supérieur de la virole 5 est soudé en 5a de façon étanche et accessible sur la périphérie du fond 1. Enfin, à l'extrémité supérieure de celui-ci est soudée une bride 12 reliée en outre à la virole 5 par douze goussets 13. La paroi externe de la chambre de fluidisation 14 est constituée par une virole 15 dont la partie inférieure inclinée 16 repose par des pieds 17 sur un bâti constitué de poutrelles 18. La partie inférieure 16 est munie d'une bride 19 qui sert de support au matériau réfractaire 20 formant le revêtement interne de la chambre de fluidisation. Cette bride 19 surplombe en partie la cuve à sa périphérie et la bride 12 vient s'y assembler par des boulons tels que 21, de sorte que l'ensemble de la grille et de la boîte à vent se trouve suspendu de façon amovible sous la chambre 14. Au-dessous du niveau N des têtes 4 subsiste en permanence une couche de particules non fluidisées, formant écran thermique.

Comme représenté en pointillé sur les figures 1 et 2, une dalle 22 de béton léger peut être disposée à la partie inférieure 2a des tubes 2 pour améliorer l'isolation thermique entre la chambre de fluidisation 14 disposée à la partie supérieure de la cuve, et la boîte à vent 11 disposée à la partie inférieure de la cuve 1.

Comme représenté à la figure 3, la tête d'injection 4, constituant l'extrémité de la partie supérieure 2b de chaque tube 2 est munie d'une bague 23 entourant le haut de cette partie supérieure et d'une rondelle d'obturation 24 soudée à son extrémité, six trous 25 traversant horizontalement le tube et la bague 23 de façon à assurer un écoulement radial du gaz de fluidisation, empêchant ainsi la pénétration des particules solides fluidisées à l'intérieur des tubes de fluidisation 2.

A titre d'exemple, on fait fonctionner une colonne du type représenté sur les dessins ayant un diamètre externe de 2,40 m, un diamètre interne de 1,50 m et comportant 381 tubes de fluidisation 2 d'un diamètre interne de 16 mm et d'une hauteur totale de 570 mm, en injectant de l'air à 20°C dans la boîte à vent 11, à raison de 1400 m³/heure. On l'utilise pour fluidiser du sable ayant une taille de particules moyenne de 180 microns en injectant du fuel juste au dessus de la grille de fluidisation à raison de 115 kg/heure. On forme ainsi un lit fluidisée de particules de sable d'une épaisseur de 1,50 m à une température de 1200°C.

On constate que le fond bombé 1 de la cuve est porté seulement à 150°C pour une hauteur de lit de sable non fluidisé de 530 mm. On n'observe aucun passage du sable fluidisé vers la boîte à vent 11.

**Revendications**

1. Grille de fluidisation destinée notamment à la fluidisation de particules solides à haute température, du type comprenant une paroi métallique (1) constituant tout à la fois un plafond pour une boîte à vent (11) délimitée latéralement par des parois latérales (5, 10), et un fond pour une chambre de fluidisation (14), délimitée latéralement par des parois (15, 16), ladite paroi (1) étant traversée par un ensemble de tubes métalliques verticaux de fluidisation (2) débouchant dans la chambre (14), à leur niveau supérieur, par des orifices d'injection (25) situés à une même hauteur suffisante pour laisser reposer sur le fond (1) de la chambre (14) une couche de particules en vrac constituant pour lui un écran thermique, lesdits tubes (2) recevant le gaz de fluidisation de la boîte à vent (11) afin de l'injecter dans la chambre de fluidisation (14) par lesdits orifices (25), caractérisée en ce que ladite paroi métallique (1) forme une cuve ayant sa concavité tournée vers la cambre de fluidisation (14) et ses flancs s'évasant vers le haut, lesdits flancs étant emboîtés partiellement dans une virole métallique (5) et soudés à son bord supérieur par une soudure (5a) accessible de l'extérieur, ladire virole (5) constituant elle-même la partie supérieure de la paroi latérale (5, 10) de la boîte à vent (11), le bord supérieur desdits flancs étant rendu solidaire des parois (15, 16) de la chambre de fluidisation (14), par des moyens d'assemblage (12, 19, 21), également accessibles de l'extérieur, assurant l'étanchéité entre ladite chambre (14) et l'extérieur.

2. Grille selon la revendication 1, caractérisé en ce que l'assemblage obtenu par lesdits moyens d'assemblage (12, 19, 21) est de type amovible, lesdits moyens comportant, de préférence, une bride (12) soudée au bord supérieur de la cuve métallique (1), une bride complémentaire (19) soudée aux parois (15, 16) de la chambre de fluidisation (14) et des boulons d'assemblage (21).

3. Grille selon la revendication 2, caractérisée en ce que les orifices d'injection (25) sont disposés à un niveau sensiblement supérieur à celui desdites brides (12, 19), de manière à conforter, par la présence du lit mort, l'étanchéité de ladite chambre (14) au joint desdites brides (12, 19).

4. Grille selon l'une des revendications 2 et 3, caractérisée en ce que l'ensemble de la boîte à vent (11) est suspendu de façon amovible aux parois (15, 16) de la chambre de fluidisation (14), celles-ci étant supportées à leur partie inférieure (17, 18).

5. Grille selon l'une quelconque des revendications précédentes, caractérisée en ce que la cuve (1) comporte un fond bombé normalisé.

6. Grille selon l'une des revendications 1 à 5, caractérisée en ce que la virole (5) et les parois (10) sont garnies intérieurement d'un doublage isolant (7, 9).

7. Grille selon la revendication 6, caractérisée en ce que le doublage isolant (9) disposé au niveau supérieur de la virole (5) est constitué d'un bourrage de matériau réfractaire fibreux.

8. Grille selon l'une des revendications précédentes, caractérisée en ce que les tubes (2) sont de même langueur et de même diamètre.

9. Grille selon l'une des revendications 1 à 8, caractérisée en ce que les tubes (2) sont dudgeonnés et soudés sur le fond (1).

10. Grille selon l'une des revendications précédentes, caractérisée en ce qu'une dalle (22) de béton isolant léger est disposée à mi-hauteur des tubes de fluidisation, cette dalle étant sans contact avec la cuve métallique (1).

**Patentansprüche**

1. Wirbelstromrost, insbesondere zur Fluidisierung von Festkörperteilchen mit hoher Temperatur, mit einer Metallwand (1), welche insgesamt eine Decke für ein Gebläsegehäuse (11) bildet, das seitlich durch Seitenwände (5, 10) begrenzt ist, und mit einem Boden für eine Wirbelstromkammer (14), die seitlich durch Wände (15, 16) begrenzt ist, wobei die Wand (1) von einer Anzahl von vertikalen metallischen Wirbelstromrohren (2) durchgriffen ist, die in die Kammer (14) in einem oberen Niveau durch Injektionsöffnungen (25) einmünden, die ausreichend hoch gelegen sind, um auf dem Boden (1) der Kammer (14) ein Kissen aus Teilchen lose liegen zu lassen, das für diesen einen Wärmeschild bildet, und wobei die Rohre (2) das Fluidisiergas vom Gebläsegehäuse (11) aufnehmen, um es in die Wirbelstromkammer (14) durch die Öffnungen (25) einzudüsen, dadurch gekennzeichnet, daß die Metallwand (1) eine Wanne bildet, deren Konkavität zur Wirbelstromkammer (14) gerichtet ist und deren Flanken sich nach oben ausweiten, wobei die Flanken teilweise in einem Metallring (5) eingesetzt und an ihrem oberen Rand durch eine von außen zugängliche Schweißung angeschweißt sind, und wobei der Ring (5) selbst den oberen Abschnitt der Seitenwand (5, 10) des Gebläsegehäuses (11) bildet und der obere Rand dieser Flanken an den Wänden (15, 16) der Wirbelstromkammer (14) durch gleichermaßen von außen zugängliche Verbindungsmittel (12, 19, 21) befestigt ist, welche die Abdichtung zwischen der Kammer (14) und der Außenumgebung sichern.

2. Rost nach Anspruch 1, dadurch gekennzeichnet, daß die durch die Verbindungsmittel (12, 19, 21) erzielte Verbindung lösbar ist und die Verbindungsmittel vorzugsweise einen am oberen Rand der Metallwanne (1) angeschweißten Flansch (12), einen mit den Wänden (15, 16) der Wirbelstromkammer (14) verschweißten zusätzlichen Flansch (19) und Verbindungsschrauben (21) aufweisen.

3. Rost nach Anspruch 2, dadurch gekennzeichnet, daß die Injektionsöffnungen (25) auf einem gegenüber den Flanschen (12, 19) merklich höheren Niveau angeordnet sind, um durch das entstehende Bett die Abdichtung der Kammer (14) an der Verbindung der Flansche (12, 19) zu stärken.

4. Rost nach einem der Ansprüche 2 und 3, dadurch gekennzeichnet, daß der Aufbau des Gebläsegehäuses (11) lösbar an den Wänden (15, 16) der Wirbelstromkammer (14) aufgehängt ist, welche an ihrem unteren Abschnitt (17, 18) abgestützt sind.

5. Rost nach einem der vorhergehenden Ansprüche, dadurch gekennzeichnet, daß die Wanne (1) einen genormt gewölbten Boden aufweist.

6. Rost nach einem der Ansprüche 1 bis 5, dadurch gekennzeichnet, daß der Ring (5) und die Wände (10) innen mit einem Isolierfutter versehen sind.

7. Rost nach Anspruch 6, dadurch gekennzeichnet, daß das Isolierfutter (9), welches auf einem höherliegenden Niveau des Rings (5) angeordnet ist, durch eine Packung aus feuerbeständigem Fasermaterial gebildet ist.

8. Rost nach einem der vorhergehenden Ansprüche, dadurch gekennzeichnet, daß die Rohre (2) die gleichen Länge und den gleichen Durchmesser aufweisen.

9. Rost nach einem der Ansprüche 1 bis 8, dadurch gekennzeichnet, daß die Rohre (2) gewalzt und auf dem Boden (1) geschweißt sind.

10. Rost nach einem der vorhergehenden Ansprüche, dadurch gekennzeichnet, daß eine Platte (22) aus isolierendem Leichtbeton auf halber Höhe der Wirbelstromrohre angeordnet ist, wobei sich die Platte ohne Kontakt mit der Metallwanne (1) befindet.

**Claims**

1. Fluidisation grid intended particularly for fluidisation of solid particles at high temperature, of the type comprising a metal wall (1) forming both a cover for a blowing box (11) limited laterally by lateral walls (5, 10) and a bottom for a fluidisation chamber (14) limited laterally by walls (15, 16), said wall (1) having passing therethrough vertical metal tubes (2) for fluidisation opening into the chamber (14), at their upper end, by injection orifices (25) positioned at a common height sufficient to allow a layer of loose particles to rest on the bottom (1) of the chamber (14) to form a heat screen for the latter, said tubes (2) receiving fluidisation gas from the blowing box (11) in order to inject it into the fluidisation chamber (14) through said orifices (25), characterised in that said metal wall (1) forms an enclosure having a concavity directed towards the fluidisation chamber (14) and sides extending outwardly and upwardly, said sides being partially enclosed in a metal ring (5) and welded at its upper edge by a weld (5a) accessible from the exterior, said ring (5) itself forming the upper part of the lateral wall (5, 10) of the blowing box (11), the upper edge of said sides being joined to the walls (15, 16) of the fluidisation chamber (14) by assembly means (12, 19, 21) also accessible from the exterior, ensuring imperviosity between said chamber (14) and the exterior.

2. Grid according to claim 1, characterised in that the assembly obtained by said assembly means (12, 19, 21) is of the fixed type, said means preferably comprising a flange (12) welded to the upper edge of the metal enclosure (1), a complementary flange (19) welded to the walls (15, 16) of the fluidisation chamber (14) and assembly bolts (21).

3. Grid according to claim 2, characterised in that the injection orifices (25) are arranged at a height substantially higher than that of said flanges (12, 19) so as to reinforce, by the presence of the inactive bed, the imperviosity of said chamber (14) at the joint between said flanges (12, 19).

4. Grid according to one of claims 2 and 3, characterised in that the blowing box assembly (11) is suspended in fixed manner from the walls (15, 16) of the fluidisation chamber (14), the walls being supported at their lower part (17, 18).

5. Grid according to any one of the preceding claims, characterised in that the enclosure (1) comprises a standardised curved bottom.

6. Grid according to one of claims 1 to 5, characterised in that the ring (5) and the walls (10) are provided with an insulating interior lining (7, 9).

7. Grid according to claim 6, characterised in that the insulating lining (9) arranged at the upper part of the ring (5) is formed of a packing of fibrous refractory material.

8. Grid according to one of the preceding claims, characterised in that the tubes (2) are of the same length and the same diameter.

9. Grid according to one of claims 1 to 8, characterised in that the tubes (2) are expanded and welded to the bottom (1).

10. Grid according to one of the preceding claims, characterised in that a slab of light insulating cement is arranged at mid-height of the fluidisation tubes, this slab having no contact with the metall enclosure (1).

FIG_1

FIG_2

FIG_3

0 022 726